# EUROPÄISCHE PATENTSCHRIFT

(11) **EP 2 807 731 B1**
(45) Veröffentlichungstag und Bekanntmachung des Hinweises auf die Patenterteilung: **06.04.2016**
(21) Anmeldenummer: 13701567.3
(22) Anmeldetag: 17.01.2013
(51) Int. Cl.: H02K 7/116, H02K 5/22, H02K 11/00, H02K 7/08

(54) **GETRIEBE MIT EINEM ZENTRALEN GEHÄUSETEIL**
TRANSMISSION COMPRISING A CENTRAL HOUSING PART
TRANSMISSION POURVUE D'UNE PARTIE CARTER CENTRALE

(30) Priorität: 26.01.2012 DE 102012001388
(43) Veröffentlichungstag der Anmeldung: 03.12.2014
(73) Patentinhaber: Sew-Eurodrive GmbH & Co. KG, 76646 Bruchsal (DE)
(72) Erfinder: SCHMIDT, Josef, 76676 Graben-Neudorf (DE); DOMBECK, Michael, 76703 Kraichtal/Gochsheim (DE); TESCH, Sven, 76698 Ubstadt-Weiher (DE); SCHILLINGER, Jens, 76437 Rastatt (DE); MORITZ, Thorsten, 76698 Ubstadt-Weiher (DE)
(86) Internationale Anmeldenummer: PCT/EP2013/000130
(87) Internationale Veröffentlichungsnummer: WO 2013/110443

(56) Entgegenhaltungen:
- DE-A1- 2 827 722
- DE-A1-102005 037 488
- DE-A1-102008 044 959

## Beschreibung

Die Erfindung betrifft ein Getriebe mit einem zentralen Gehäuseteil.

Es ist bekannt, Getriebe mit einem Elektromotor anzutreiben. Dabei ist die Lagerung der Rotorwelle des Elektromotors in einem anderen Teil angeordnet als die Lagerung der Abtriebswelle oder Zwischenwelle des Getriebes.

Aus der DE 10 2008 044959 A1 ist ein Kompaktantrieb bekannt, der ein zentrales Gehäuseteil aufweist und einen Rotor eines Elektromotors, welcher beidseitig gelagert ist.

Aus der DE 28 27 722 A1 ist ein Getriebemotor für den Antrieb von Aufzügen bekannt.

Aus der DE 10 2005 037 488 A1 ist ein Umrichter bekannt, der verschiedene Temperaturbereiche aufweist.

Der Erfindung liegt daher die Aufgabe zugrunde, ein Getriebe mit einem zentralen Gehäuseteil weiterzubilden.

Erfindungsgemäß wird die Aufgabe bei dem Getriebe nach den in Anspruch 1 angegebenen Merkmalen gelöst. Weitere Vorteile ergeben sich aus den Unteransprüchen.

Wichtige Merkmale der Erfindung bei dem Getriebe sind, dass es mit einem zentralen Gehäuseteil ausgeführt ist, wobei

im zentralen Gehäuseteil
- die Lager der eintreibenden Welle des Getriebes,
- die Lager der Abtriebswelle
- und/oder die Lager einer Zwischenwelle
aufgenommen sind, insbesondere aufgenommen und wärmeleitend verbunden sind,

wobei die eintreibende Welle auch als einseitig im zentralen Gehäuseteil gelagerte Rotorwelle eines Elektromotors fungiert.

Von Vorteil ist dabei, dass ein kompakter Aufbau ermöglicht ist, wobei durch die gemeinsame Lagerung im gleichen Gehäuseteil die Lageraufnahmen bei ihrer Herstellung in einer Werkzeugmaschine in einer einzigen Aufspannung fertigbar sind. Somit ist eine hohe Genauigkeit in der relativen Beabstandung der Lageraufnahmen erreichbar. Außerdem ist die Wärme der Lagerung der Rotor in einem vom Stator getrennten Teil an die Umgebung abführbar. Zwischen dem zentralen Gehäuseteil und dem Statorblechpaket des Motors ist eine Wärmesperre, insbesondere Dichtung, angeordnet. Von Vorteil ist dabei, dass kein Wasser zum Motorinnenraum dringen kann. Außerdem verschlechtert die Dichtung, beispielsweise eine Flachdichtung und/oder ein O-Ring, den Wärmeübergang zwischen zentralem Gehäuseteil und Statorblechpaket. Zusammen mit einer zwischen Gehäuseunterteil des auf den Klemmenkastenansatz aufgesetzten Umrichters und dem zentralen Gehäuseteil angeordneten Dichtung, beispielsweise wiederum eine Flachdichtung und/oder ein O-Ring, wird der Wärmeübergangswiderstand von der Elektronik zum Motor erheblich verschlechtert. Somit ist quasi eine doppelte Wärmesperre zwischen Elektronik und Motor erreicht.

Bei einer vorteilhaften Ausgestaltung weist die Rotorwelle in einem ersten axialen Bereich ein Aktivteil auf und

in einem zweiten axialen Bereich weist die Rotorwelle eine eintreibende Verzahnung des Getriebes auf oder mit einem eintreibenden Verzahnungsteil des Getriebes verbunden ist,

wobei die Lagerung, insbesondere die Lager der Rotorwelle, der Rotorwelle axial, insbesondere also in Rotorachsrichtung, zwischen dem ersten und dem zweiten axialen Bereich angeordnet ist,

insbesondere wobei ein am zentralen Gehäuseteil aufgenommener Wellendichtring axial zwischen der Lagerung der Rotorwelle und der eintreibenden Verzahnung des Getriebes angeordnet ist. Von Vorteil ist dabei, dass im Bereich der Lagerung eine Dichtung anbringbar ist, welche den Schmieröl-befüllten Verzahnungsbereich vom Motorinnenraum trennt. Die Lager sind fettgeschmiert ausführbar, da sie außerhalb des Verzahnungsbereichs angeordnet sind.

Bei einer vorteilhaften Ausgestaltung weist das zentrale Gehäuseteil eine Ausnehmung auf, durch welche Statorwicklungsdrähte in einen Anschlussbereich, insbesondere in einen Anschlusskasten, herausgeführt sind, insbesondere aus dem Motorinnenraum radial herausgeführt sind. Von Vorteil ist dabei, dass der Anschlusskasten am zentralen Gehäuseteil des Getriebes angeformt ist. Somit kann an das zentrale Gehäuseteil ein Statorblechpaket angebaut werden, ohne dass am Statorgehäuse oder Statorblechpaket eine Anschlussvorrichtung oder ein Anschlusskasten vorgesehen werden muss.

Bei einer vorteilhaften Ausgestaltung ist zwischen dem zentralen Gehäuseteil und einem verbundenen Getriebedeckel eine weitere Wärmesperre, insbesondere Dichtung, angeordnet. Von Vorteil ist dabei, dass der Getriebedeckel dicht verbindbar ist mit dem Gehäuseteil. Der Getriebedeckel ist jedoch kühler als das Gehäuseteil. Somit ist die Wärme der Leistungselektronik des Umrichters dem Getriebedeckel gegenüber stehend effektiv an die Umgebungsluft abführbar, da vom Getriebedeckel nur ein geringer Wärmestrom in die Umgebungsluft zwischen Gehäuseunterteil und Getriebedeckel einströmt.

Bei einer vorteilhaften Ausgestaltung weist das zentrale Gehäuseteil einen einstückig an ihm angeformten Klemmenkastenansatz auf, auf den ein Umrichter aufsetzbar ist, insbesondere schraubverbindbar ist. Von Vorteil ist dabei, dass ein einfaches Verbinden mit einem Umrichter ermöglicht ist. Der Umrichter ist auf dem Getriebe aufgesetzt und nicht auf dem Motorbereich. Somit ist der Motor vom Umrichter bestmöglich wärmetechnisch getrennt.

Bei einer vorteilhaften Ausgestaltung ist der Umrichter mit dem Getriebe verbunden, wobei der Umrichter ein Gehäuseunterteil aufweist, mit welchem die Leistungselektronik des Umrichters verbunden ist, insbesondere wärmeleitend verbunden ist, und wobei der Umrichter ein auf das Gehäuseunterteil verbundenes Gehäuseoberteil aufweist, mit welchem die Signalelektronik wärmeleitend verbunden ist, insbesondere über zwischengeordnete Luft.

Von Vorteil ist dabei, dass die Wärme der Leistungshalbleiter des Umrichters an die Umgebung des Getriebes abführbar ist, wobei der Umrichter auf dem Getriebe befestigt ist und dort auch die Versorgungskabel in den vom Anschlusskasten, also Klemmenkasten, umgebenen Anschlussbereich geführt sind, wobei der Anschlusskasten am Getriebe angeordnet ist und zwischen dem Umrichter und dem Getriebe angeordnet ist. Somit sind die Versorgungskabel von der Umgebung aus in den Anschlussbereich führbar und ebenso die Enden der Statorwicklungsdrähte. Außerdem sind auch die elektrischen Anschlüsse des Umrichters über eine Steckverbindung in den Anschlussbereich führbar und somit der Umrichter mit elektrischer Energie versorgbar.

Bei einer vorteilhaften Ausgestaltung ist zwischen Gehäuseunterteil und Gehäuseoberteil eine Wärmesperre, insbesondere Dichtung, angeordnet und/oder das Gehäuseoberteil ist aus Kunststoff ausgeführt. Von Vorteil ist dabei, dass die Leistungselektronik auf einem höheren Temperatur betreibbar ist als die Signalelektronik, welche wärmeleitend mit dem Gehäuseoberteil verbunden ist, so dass die Wärme der Signalelektronik getrennt von der Wärme der Leistungselektronik an die Umgebung abführbar ist. Die Wärme der Leistungselektronik ist über das Gehäuseunterteil an die zwischen Gehäuseunterteil und Getriebe, insbesondere Getriebedeckel des Getriebes, abführbar.

Bei einer vorteilhaften Ausgestaltung ist das Gehäuseunterteil mit dem Klemmenkastenansatz des zentralen Gehäuseteils verbunden und überragt dieses seitlich,
und/oder das Gehäuseunterteil in axialer Richtung den vom zentralen Gehäuseteil, den vom Getriebedeckel, den von einer Zwischenwelle und/oder den von der Abtriebswelle axial überdeckten Bereich zumindest teilweise überdeckt. Von Vorteil ist dabei, dass kein direkter Kontakt zwischen Gehäuseunterteil und Getriebe, insbesondere Getriebedeckel, besteht. Somit ist die Wärme an die zwischengeordnete Umgebungsluft abführbar. Da der Getriebedeckel eine geringere Temperatur als das restliche Getriebe aufweist, ist die Entwärmung des Gehäuseunterteils an die Umgebungsluft sehr effektiv ausführbar.

Bei einer vorteilhaften Ausgestaltung ist durch die den Getriebedeckel abgedeckte Ausnehmung des zentralen Gehäuseteils das Endrad des Getriebes hindurchführbar, insbesondere bei Montage des Getriebes. Von Vorteil ist dabei, dass ein Getriebedeckel am Getriebe über eine als Dichtung ausgeführte Wärmesperre verbunden ist und somit eine niedrige Temperatur aufweist als das restliche Getriebe.

Bei einer vorteilhaften Ausgestaltung überdeckt der vom Anschlussbereich axial überdeckte Bereich zumindest teilweise den von der Lagerung der Rotorwelle oder von einem Lager der Rotorwelle überdeckten axialen Bereich. Von Vorteil ist dabei, dass ein Motor kompakt an das Getriebe anbaubar ist. Denn die Statorwicklungsdrähte sind direkt in den Anschlussbereich führbar, wobei der Anschlussbereich radial über einem Lager der Rotorwelle angeordnet ist.

Außerdem ist auf diese Weise ein Sensor zwischen den Lagern der Rotorwelle am zentralen Gehäuseteil anordenbar, der mit der Rotorwelle derart in Wirkverbindung tritt, dass eine physikalische Größe, wie beispielsweise Drehzahl oder Drehmoment, bestimmbar ist. Durch eine Ausnehmung in der ringförmigen Lageraufnahme der Lagerung der Rotorwelle sind elektrische Leitungen zum Sensor führbar, die vom Anschlussbereich durch eine Ausnehmung im zentralen Gehäuseteil geführt sind. Die Sensorleitungen sind also geschützt vom Sensor zum Anschlussbereich führbar.

Bei einer vorteilhaften Ausgestaltung ist das Statorblechpaket aus zwei Sorten von Einzelblechteilen zusammengesetzt, insbesondere stanzpaketiert, klebeverbunden und/oder schweißverbunden ist,
insbesondere wobei das Statorblechpaket einen ersten Abschnitt aufweist, der aus Einzelblechteilen erster Sorte zusammengesetzt ist, und einen zweiten Abschnitt aufweist, der aus Einzelblechteilen zweiter Sorte zusammengesetzt ist,
insbesondere wobei eine erste Wärmesperre an einer Innenecke angeordnet ist, die im Übergangsbereich zwischen dem ersten und zweiten Abschnitt gebildet ist,
insbesondere wobei die Einzelblechteile der ersten Sorte sich radial weiter erstrecken als die Einzelblechteile der zweiten Sorte. Von Vorteil ist dabei, dass Stator und zentrales Gehäuseteil wärmetechnisch separiert sind.

Bei einer vorteilhaften Ausgestaltung ist am zentralen Gehäuseteil eine Lageraufnahme für die Lager der Rotorwelle ausgeformt, wobei die Lageraufnahme ringförmig ausgeführt ist, wobei an der Außenseite des Rings in Umfangsrichtung regelmäßig voneinander beabstandete Stützbereiche aufweist, insbesondere deren größter Radialabstand in axialer Richtung vom Motor weg zunimmt. Von Vorteil ist dabei, dass eine verbesserte Steifigkeit und Stabilität der Lageraufnahme erreichbar ist.

Bei einer vorteilhaften Ausgestaltung ist am zentralen Gehäuseteil eine topfförmige Aufnahme für einen Wickelkopf des Stators angeordnet. Von Vorteil ist dabei, dass eine kompakte Ausführung eines Getriebemotors ermöglicht ist, der einfach fertigbar ist.

Bei einer vorteilhaften Ausgestaltung sind Abtriebswelle und Rotorwelle koaxial angeordnet. Von Vorteil ist dabei, dass ein koaxialer Antrieb einfach herstellbar ist.

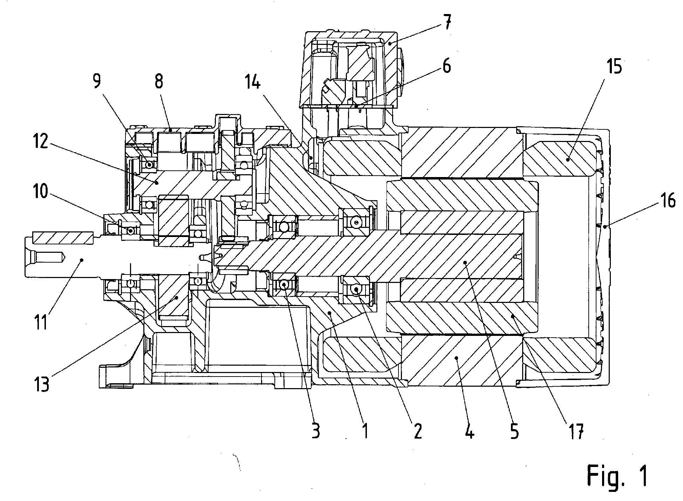

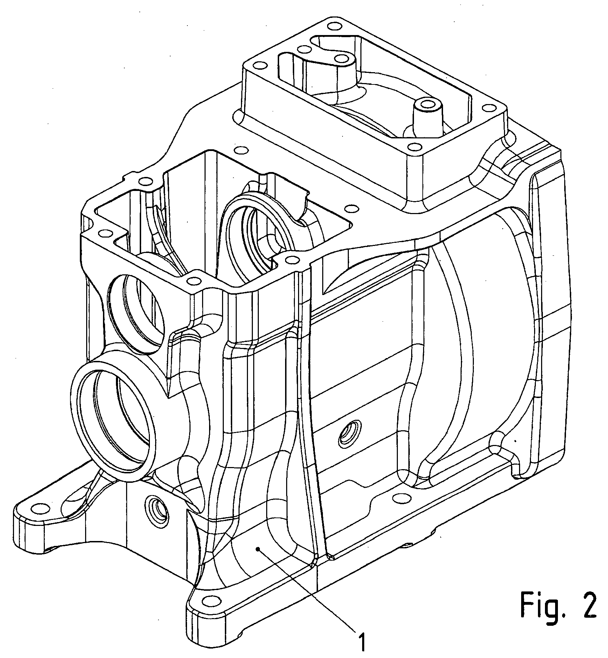

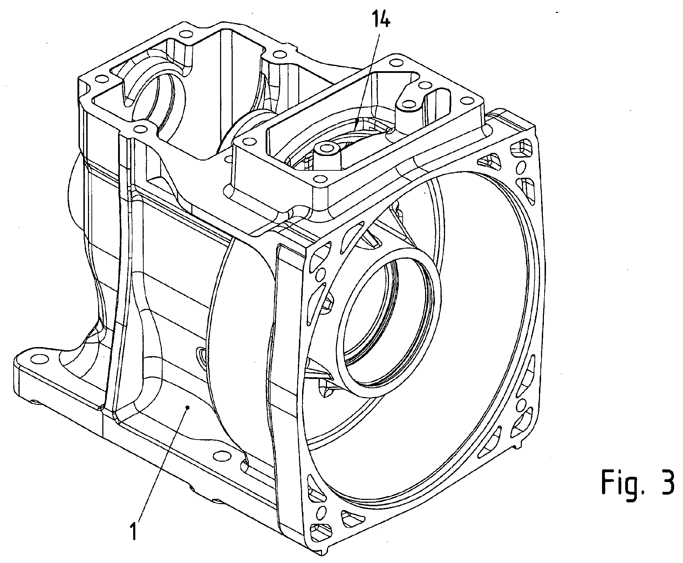

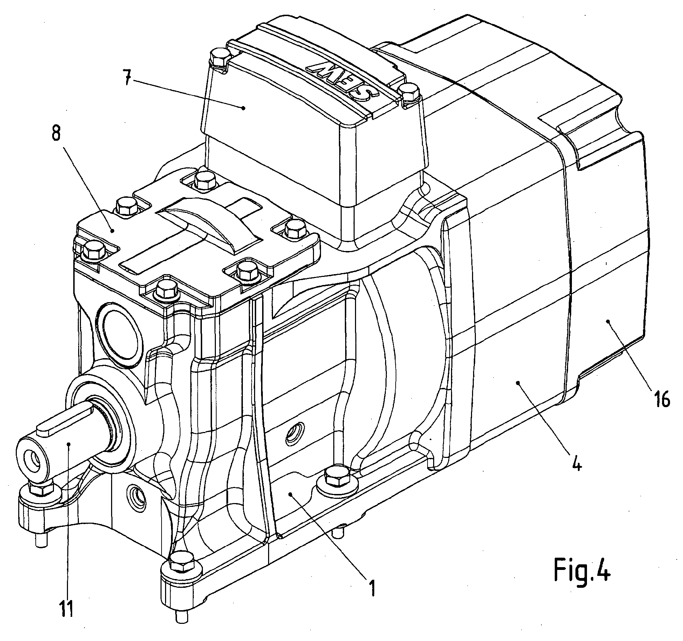

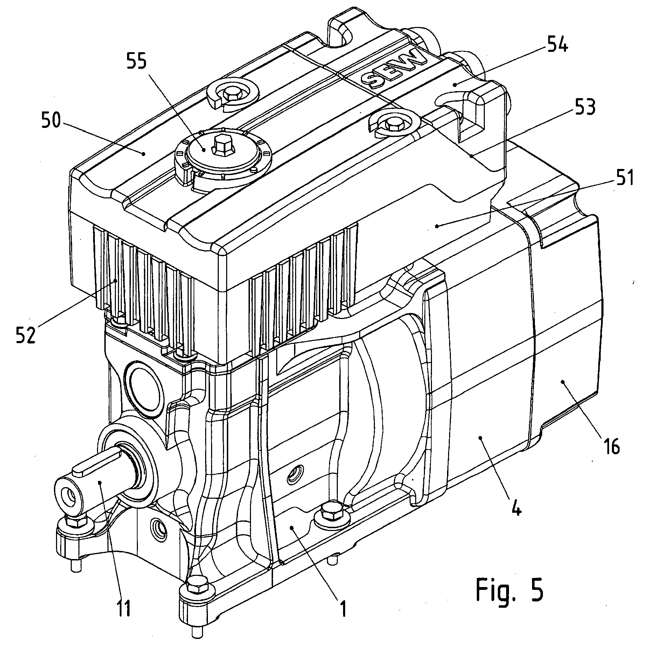

Die Erfindung wird nun anhand von Abbildungen näher erläutert:
I n der Figur 1 ist ein Längsschnitt durch ein erstes nicht erfindungsgemäßes Ausführungsbeispiel gezeigt, das ein Getriebegehäuse 1 umfasst und einen Klemmenkasten zum Anschluss elektrischer Versorgungsleitungen aufweist.
I n der Figur 2 ist eine Schrägansicht des Getriebegehäuses 1 aus einer ersten Blickrichtung gezeigt.
I n der Figur 3 ist eine Schrägansicht des Getriebegehäuses 1 aus einer anderen Blickrichtung gezeigt.
I n der Figur 4 ist eine Schrägansicht des nicht erfindungsgemäßen Ausführungsbeispiel von außen gezeigt.
I n der Figur 5 ist eine Schrägansicht eines erfindungsgemäßen Ausführungsbeispiels gezeigt, welches im Unterschied zum ersten Ausführungsbeispiel einen auf den Klemmenkastenansatz aufgesetzten Umrichter aufweist.

Wie in Figur 1 gezeigt, weist das nicht erfindungsgemäße Getriebe ein zentrales Gehäuseteil 1 auf, welches Lager 10 der Abtriebswelle des Getriebes, Lager 9 der Zwischenwelle 12 Aufnimmt und auch Lager (2, 3) einer eintreibenden Welle 5, die auch als Rotorwelle eines antreibenden Elektromotors fungiert, welcher eintriebsseitig an das Getriebe angebaut werden kann.

Hierzu wird die als Rotorwelle fungierende eintreibende Welle 5 mit einem Aktivteil, insbesondere Kurzschlusskäfig für Betriebsweise nach Art eines Asynchronmotors und/oder Dauermagneten für Betriebsweise als Synchronmotor, ausgeführt und ein Statorblechpaket 4 an das zentrale Gehäuseteil 1 angesetzt, an welches wiederum ein Gehäuseteil 16 angesetzt wird und durch das Statorblechpaket 4 durchgehende Schrauben in das zentrale Gehäuseteil eingeschraubt werden, so dass das Gehäuseteil 16 von den Schraubenköpfen auf das Statorblechpaket 4 gedrückt wird und dieses wiederum auf das zentrale Gehäuseteil 1.

Die elektrischen Leitungen der Statorwicklung werden durch eine Ausnehmung 14 im zentralen Gehäuseteil 1 des Getriebes in einen Klemmenkasten, also Anschlusskasten, geführt. Dabei werden also vom Motorbereich kommende elektrische Leitungen durch eine Ausnehmung im zentralen Gehäuseteil 1 in einen Anschlussbereich geführt, welcher begrenzt ist durch einen am zentralen Gehäuseteil 1 ausgeformten Klemmenkastenansatz und einen auf diesen aufgesetzten Klemmenkastendeckel 7. Somit ist also der Anschlussbereich durch das zentrale Gehäuseteil 1 des Getriebes samt der Ausnehmung 14 und den Klemmenkastendeckel 7 begrenzt und gehäusebildend umgeben.

Im Klemmenkasten ist eine Leiterplatte 6 schraubverbunden mit dem zentralen Gehäuseteil 1, wobei die Leitungen der Statorwicklung zur Leiterplatte 6 geführt und dort elektrisch verbunden, insbesondere lötverbunden, sind.

Von der äußeren Umgebung ist ein Kabel zum Anschlusskasten hin führbar, an dessen Ende ein Steckverbinderteil angeordnet ist, dessen Kontakte mit elektrischen Leitungen des Kabels verbunden sind. Ein entsprechendes Gegensteckverbinderteil ist auf der Leiterplatte 6 elektrisch verbunden, insbesondere lötverbunden. Somit ist ein einfaches Verbinden oder Trennen der den Stator versorgenden elektrischen Leitungen ermöglicht.

Vorzugsweise ist der Klemmenkastendeckel 7 als Gehäuse des Steckverbinderteils ausgeführt, so dass beim Aufsetzen des Klemmenkastendeckels 7 auf den Klemmenkastenansatz des zentralen Gehäuseteils 1 nicht nur der Innenraum des Getriebemotors abgedichtet wird gegen die Umgebung sondern auch gleichzeitig die elektrischen Verbindungen zwischen Steckverbinderteil und Gegensteckverbinderteil erzeugt werden und somit die Statorwicklung über die Steckverbindung versorgbar ist, wobei Leiterbahnen der Leiterplatte 6 elektrisch zwischengeordnet sind zwischen den Statorwicklungsdrähten und den Kontakten des Gegensteckverbinderteils.

Vorzugsweise ist die Leiterplatte 6 mit einer metallischen Schraube an das aus Metall ausgeführte zentrale Gehäuseteil 1 angeschraubt. Dabei kontaktiert der ebenfalls aus Metall ausgeführte Schraubenkopf einen Leiterbahnabschnitt der Leiterplatte, so dass auf diese Weise ein Nullleiter, insbesondere eine PE-Leitung, des Kabels elektrisch mit dem zentralen Gehäuseteil 1 verbunden ist. Der Nullleiter ist dabei ebenfalls über die Steckverbindung zur Leiterplatte, insbesondere zur Leiterbahn der Leiterplatte, geführt.

Da die Rotorwelle 5 einseitig im zentralen Gehäuseteil 1 gelagert ist, ist auf diese Weise eine fliegende Lagerung, also einseitige Lagerung, realisiert, die eine einfache Fertigung des Antriebs ermöglicht, insbesondere durch Zusammenführen der Teile in axialer Richtung. Außerdem sind die Lager (2, 3) des Rotors im selben zentralen Gehäuseteil 1 gelagert wie die Lager 10 der abtreibenden Welle 11 des Getriebes. Somit sind die Lageraufnahmen in einer Werkzeugmaschine in derselben Aufspannung des zentralen Gehäuseteils in der Werkzeugmaschine fertigbar und es ist somit eine hohe Genauigkeit in der relativen Positionierung der Lageraufnahmen in einfacher Weise erreichbar.

Die einseitige Lagerung der Rotorwelle weist ein statorzugewandtes größeres Lager 2 auf und ein hierzu kleineres getriebezugewandtes Lager 3.

Die Rotorwelle 5 und die Abtriebswelle 11 sind zueinander parallel und sogar koaxial angeordnet.

Die Rotorwelle weist an ihrem axialen getriebezugewandten Endbereich eine Verzahnung auf, die als eintreibende Verzahnung des Getriebes fungiert. Somit ist die gesamte Lagerung der Rotorwelle 5 axial zwischen der eintreibenden Verzahnung, insbesondere Ritzel, und dem Aktivteil angeordnet.

Der am zentralen Gehäuseteil 1 einstückig angegossene Klemmenkastenansatz ist aus dem restlichen Grundkörper des Gehäuseteils des Getriebes erhoben ausgeführt und weist zueinander parallel ausgerichtete Gewindebohrungen auf, die jeweils senkrecht zur Achsrichtung der Rotorwelle 5 ausgerichtet sind. Somit ist der Klemmenkastendeckel 7 nach seinem Aufsetzen auf des Klemmenkastenansatz schraubverbindbar, wobei eine Dichtung zwischen Klemmenkastenansatz und Klemmenkastendeckel 7 vorsehbar ist.

Für das Anfügen des Motors weist das Gehäuseteil 1 eine kreisrunde topfförmige Aufnahme auf, so dass das Statorblechpaket mit seiner Innenecke anschließbar ist. Die topfförmige Aufnahme ist in einem in etwa quadratisch erscheinenden Flanschbereich vorgesehen. Somit sind in den vier Eckbereichen Bohrungen vorsehbar, so dass Gewindestangen oder Schrauben dort verbindbar sind.

Die Innenecke des Statorblechpakets wird gebildet, indem zwei verschiedene Sorten von Einzelblechteilen zur Bildung des Statorblechpakets 4 verwendet werden. Die Einzelblechteile werden miteinander stanzpaketiert, klebeverbunden und/oder schweißverbunden. Der dem Getriebe zugewandte axiale Endbereich des Statorblechpakets 4 ist aus kreisförmigen Einzelblechteilen gefertigt und der sich daran anschließende axial mittlere Bereich des Statorblechpakets ist aus im Wesentlichen quadratischen Einzelblechteilen gefertigt, deren in Umfangsrichtung gesehen kleinster Radialaußenabstand größer ist als der Radialaußenabstand der Einzelblechteile des dem Getriebe zugewandten axialen Endbereich des Statorblechpakets 4. Auf diese Weise ist ein in Umfangsrichtung umlaufendes Inneneck gebildet, das an eine entsprechende Außenkante des zentralen Gehäuseteils 1 verbindbar ist. Vorzugsweise wird im Bereich der Innenecke auch eine Dichtung , insbesondere ein O-Ring, vorgesehen. Somit ist das Statorblechpaket dicht mit dem Getriebegehäuseteil 1 verbindbar.

Die Tiefe des Topfes ist dabei derart gewählt, dass die Umlenkbereiche der Statorwicklung, also Stator-Wicklungsköpfe, ausreichend Raum finden, also in axialer Richtung nicht das zentrale Gehäuseteil 1 berühren. Die Ausnehmung 14 ist in der Topfwand angeordnet und ermöglicht somit ein Durchführen der Statorwicklungsdrähte zu der im Anschlussbereich angeordneten Leiterplatte beziehungsweise den dortigen Anschlussvorrichtungen.

Axial zwischen der auf der Rotorwelle 5 angeordneten eintreibenden Verzahnung und der aus den Lagern (2, 3) gebildeten Lagerung ist ein Wellendichtring angeordnet, so dass der Getriebeinnenraum vom Motorinnenraum dicht abtrennbar ist.

Die Aufnahme der Lagerung der Rotorwelle ist durch einen Ring gebildet, der als Hohlzylinder ausgebildet ist und an dessen Außenseite an in Umfangsrichtung voneinander regelmäßig beabstandeten Stellen sich in axialer Richtung erstreckende Verstrebungen angeordnet sind. Der maximale Radialabstand der Verstrebungen wächst in axialer Richtung zur Abtriebswelle hin an, insbesondere linear an, insbesondere so dass die Verstrebungen aus der seitlichen Ansicht gesehen eine dreiecksförmige Form aufweisen.

Der Anschlusskasten, insbesondere der Anschlussbereich des Anschlusskastens, ist in einem axialen Bereich angeordnet, welcher sich überschneidet mit dem von der Statorwicklung, insbesondere einem Wickelkopf der Statorwicklung, überdeckten axialen Bereich. Somit wird zwar die von der Statorwicklung 15 erzeugte Wärme einerseits direkt über das Statorblechpaket 4 an die Umgebungsluft abgeleitet andererseits wird auch ein Teil über das zentrale Gehäuseteil abgeleitet und dann an die Umgebungsluft weitergeleitet. Der Anschlusskasten ist in diesem dem Statorblechpaket 4 zugewandten axialen Endbereich des zentralen Gehäuseteils 1 angeordnet. Auf diese Weise ist nämlich die Oberfläche des zentralen Gehäuseteils in diesem Endbereich durch den Anschlusskasten, insbesondere durch den am zentralen Gehäuseteil 1 einstückig ausgeformten Klemmenkastenansatz, vergrößert. Außerdem stellt der Klemmenkastenansatz eine Wärmekapazität dar, so dass Spitzenwärmeströme aufspreizbar sind. Somit werden die von den Lagern und Verzahnungsteilen erzeugten Wärmeströme des Getriebes über das Getriebegehäuse an die Umgebung weitergeleitet.

Für die bessere wärmetechnische Abtrennung des Motors vom Getriebe ist diejenige Dichtung wirksam, welche zwischen dem Statorblechpaket 4 und dem zentralen Gehäuseteil 1 angeordnet ist, insbesondere im Bereich der Innenecke, also des Zentriersitzes des Statorblechpakets 4 im zentralen Gehäuseteil 1. Außerdem sind die Funktionsteile des Motors und des Getriebes axial nebeneinander angeordnet, so dass eine größere Beabstandung der beiden Komponenten erreicht wird, obwohl eine sehr kompakte Bauart erreicht ist.

Nur die von den Lagern (2, 3) der Rotorwelle 5 erzeugte Wärme wird direkt in das zentrale Gehäuseteil 1 eingeleitet und dann an die Umgebungsluft weitergeleitet.

Es liegt also eine wärmetechnisch getrennte Ableitung der von der Lagerung der Rotorwelle 5 erzeugten Wärme und der von der Statorwicklung 15 erzeugten Wärme vor. Dies hat zum Vorteil, dass bei maximal erlaubter Wärmeleistung der Statorwicklung verschiedene Drehzahlen und somit verschiedene Lagerverlustleistungen ermöglicht sind. Es sind also verschiedene Zustände der Maschine betreibbar. Insbesondere andere als bei gemeinsamer Wärmeableitung vom Lager und von der Statorwicklung über ein gemeinsames Gehäuseteil.

Zwischen der Lagerung der Rotorwelle 5 und der Statorwicklung 15 ist nur eine einzige Wärmesperre in Form der Dichtung notwendig. Bei beidseitiger Lagerung wären hingegen zwei Wärmesperren notwendig.

In der Figur 1 ist am getriebeseitigen Endbereich der Rotorwelle 5 eine Verzahnung sichtbar, die im Eingriff steht mit einem drehfest mit einer Zwischenwelle 12 verbundenem Zahnrad. Dabei ist die Zwischenwelle parallel und beabstandet von der Rotorwelle 5. Ein weiteres drehfest mit der Zwischenwelle 12 verbundenes Verzahnungsteil steht im Eingriff mit dem auf der Abtriebswelle 11 drehfest verbundenen Endrad 13. Die Wärme der Lager 9 der Zwischenwelle 12 und der Lager 10 der Abtriebswelle 11 wird über das zentrale Gehäuseteil 1 an die Umgebung abgeführt.

Da zwischen dem Gehäuseteil 16, welches auf der getriebeabgewandten axialen Seite des Statorblechpakets 4 angeordnet ist, und dem Statorblechpaket 4 wiederum eine Dichtung angeordnet ist in der gleichen Weise wie bei der in der Innenecke angeordneten Dichtung, ist auch hier eine Wärmesperre wirksam. Somit wird die von der Statorwicklung erzeugte Wärme bevorzugt über das Statorblechpaket an die Umgebungsluft abgeleitet. Wie in Figur 5 gezeigt, ist statt des Klemmenkastendeckels 7 der Figuren 1 bis 4 erfindungsgemäßen ein Umrichter aufsteckbar. Hierzu ist ein Gehäuseoberteil 50 auf einem Gehäuseunterteil 51 aufgesetzt, welches wiederum auf dem Klemmenkastenansatz aufgesetzt und verbunden ist anstatt des Klemmenkastendeckels 7. Die Leistungselektronik des Umrichters ist wärmeleitend mit dem Gehäuseunterteil 51 verbunden, welches den Klemmenkasten, also Anschlusskasten, seitlich überragt und somit zwischen dem Gehäuseoberteil 50 und dem Getriebe angeordnet ist. In diesem überragenden Bereich weist das Gehäuseunterteil 51 Kühlrippen 52 auf.

An dem dem Motor näher angeordneten axialen Endbereich des Umrichters ist an einer Seite ein an einer Schrägung 53 des Gehäuseoberteils 50 ansetzbares Gehäuseteil 54 vorgesehen.
An der Oberseite des Gehäuseoberteils 50 ist ein Bedienelement 55 angeordnet, so dass beispielsweise die Drehzahl des Motors steuerbar ist.

Am Getriebe ist der Getriebedeckel 8 direkt dem Gehäuseunterteil 51 des Umrichters gegenüberstehend angeordnet. Da der Getriebedeckel 8 mit dem zentralen Gehäuseteil 1 dicht verbunden ist und hierzu eine Dichtung im Verbindungsbereich zwischen Getriebedeckel 8 und zentralem Gehäuseteil 1 zwischengeordnet ist, ist hierdurch eine Wärmesperre wirksam. Der Getriebedeckel weist eine niedrigere Temperatur auf als das zentrale Gehäuseteil 1, da die von den Lagern (2, 3, 10, 9) erzeugte Wärme in das zentrale Gehäuseteil 1 eingeleitet wird.

Somit ist der den Klemmenkastenansatz seitlich zum Getriebe hin überragende Abschnitt des Gehäuseunterteils als Kühlkörper für die Leistungselektronik wirksam und der auch im Zwischenbereich zwischen Getriebedeckel und Gehäuseunterteil konvektiv oder aktiv geförderte Luftstrom sorgt für eine effektive Entwärmung.

Durch die das Getriebe überragende Anordnung des Umrichters ist um das Statorblechpaket 4 mehr freier Luftraum geschaffen und somit eine verbesserte Entwärmung erreichbar, da der Luft weniger Strömungswiderstand dort entgegengesetzt ist.

Das zentrale Gehäuseteil 1, der Getriebedeckel 8 und/oder das Gehäuseunterteil 51 sind aus Metall, insbesondere Aluminium oder Stahl.

Bei weiteren erfindungsgemäßen Ausführungen ist ein Sensor und/oder ein Aktor im Getriebe anordenbar, dessen elektrische Leitungen in den Anschlussbereich geführt werden. Durch die einstückige Ausführung des zentralen Gehäuseteils 1 des Getriebes ist es in einfacher Weise ermöglicht, eine Leitung vom Sensor oder Aktor, der auch im Getriebeinneren angeordnet sein dar, zum Anschlussbereich zu führen, wobei die Leitung von Getriebegehäuse geschützt verlegbar ist.

Bei einem weiteren erfindungsgemäßen Ausführungsbeispiel ist der Getriebedeckel aus Kunststoff ausgeführt.

### Bezugszeichenliste

1 Zentrales Gehäuseteil
2 Lager, getriebeabgewandtes Lager der Rotorwelle
3 Lager, getriebezugewandtes Lager der Rotorwelle
4 Statorblechpaket
5 Rotorwelle
6 Leiterplatte
7 Klemmenkastendeckel
8 Getriebedeckel
9 Lager der Zwischenwelle 12
10 Lager der Abtriebswelle
11 Abtriebswelle
12 Zwischenwelle
13 Zahnrad, insbesondere Endrad
14 Ausnehmung
15 Statorwicklung
16 Gehäuseteil
17 Aktivteil, insbesondere Kurzschlusskäfig
50 Gehäuseoberteil
51 Gehäuseunterteil
52 Kühlrippen
53 Schrägung
54 Gehäuseteil
55 Bedienelement

## Patentansprüche

1. Getriebe mit einem zentralen Gehäuseteil (1),
wobei im zentralen Gehäuseteil (1) die Lager (10) der Abtriebswelle (11) aufgenommen sind,
wobei das zentrale Gehäuseteil (1) einen einstückig an ihm angeformten Klemmenkastenansatz aufweist, auf den ein Umrichter aufgesetzt ist, wobei der Umrichter ein Gehäuseunterteil (51) aufweist,
**dadurch gekennzeichnet, dass**
das zentrale Gehäuseteil (1) die Lager (2, 3) der eintreibenden Welle des Getriebes aufnimmt, wobei die eintreibende Welle auch als einseitig im zentralen Gehäuseteil (1) gelagerte Rotorwelle (5) eines Elektromotors fungiert und
wobei
zwischen dem zentralen Gehäuseteil (1) und dem Statorblechpaket (4) des Elektromotors eine Wärmesperre in Form einer Dichtung angeordnet ist, um zusammen mit einer zwischen dem Gehäuseunterteil (51) und dem zentralen Gehäuseteil (1) angeordneten Dichtung den Wärmeübergangswiderstand von der Elektronik des Umrichters zum Motor erheblich zu verschlechtern.

2. Getriebe nach Anspruch 1,
**dadurch gekennzeichnet, dass**
in einem ersten axialen Bereich die Rotorwelle (5) ein Aktivteil (17) aufweist und
in einem zweiten axialen Bereich die Rotorwelle (5) eine eintreibende Verzahnung des Getriebes aufweist oder mit einem eintreibenden Verzahnungsteil des Getriebes verbunden ist,
wobei die Lagerung, insbesondere die Lager (2, 3) der Rotorwelle (5), der Rotorwelle (5) axial, insbesondere also in Rotorachsrichtung, zwischen dem ersten und dem zweiten axialen Bereich angeordnet ist,
insbesondere wobei ein am zentralen Gehäuseteil (1) aufgenommener Wellendichtring axial zwischen der Lagerung der Rotorwelle (5) und der eintreibenden Verzahnung des Getriebes angeordnet ist.

3. Getriebe nach mindestens einem der vorangegangenen Ansprüche,
**dadurch gekennzeichnet, dass**
das zentrale Gehäuseteil (1) eine Ausnehmung aufweist, durch welche Statorwicklungsdrähte in einen Anschlussbereich, insbesondere in einen Anschlusskasten, herausgeführt sind, insbesondere aus dem Motorinnenraum radial herausgeführt sind.

4. Getriebe nach mindestens einem der vorangegangenen Ansprüche,
**dadurch gekennzeichnet, dass**
zwischen dem zentralen Gehäuseteil (1) und einem verbundenen Getriebedeckel (8) eine weitere Wärmesperre, insbesondere Dichtung, angeordnet ist.

5. Getriebe nach mindestens einem der vorangegangenen Ansprüche,
**dadurch gekennzeichnet, dass**
das Gehäuseunterteil (51) mit der Leistungselektronik des Umrichters verbunden ist, insbesondere wärmeleitend verbunden ist, und wobei der Umrichter ein auf das Gehäuseunterteil (51) verbundenes Gehäuseoberteil (50) aufweist, mit welchem die Signalelektronik wärmeleitend verbunden ist, insbesondere über zwischengeordnete Luft.

6. Getriebe nach Anspruch 5,
**dadurch gekennzeichnet, dass**
zwischen Gehäuseunterteil (51) und Gehäuseoberteil (50) eine Wärmesperre, insbesondere Dichtung, angeordnet ist
und/oder dass das Gehäuseoberteil (50) aus Kunststoff ausgeführt ist.

7. Getriebe nach Anspruch 4,
**dadurch gekennzeichnet, dass**
das Gehäuseunterteil (51) mit dem Klemmenkastenansatz des zentralen Gehäuseteils (1) verbunden ist und dieses seitlich überragt,
und/oder das Gehäuseunterteil (51) in axialer Richtung den vom zentralen Gehäuseteil (1), den vom Getriebedeckel (8), den von einer Zwischenwelle und/oder den von der Abtriebswelle (11) axial überdeckten Bereich zumindest teilweise überdeckt.

8. Getriebe nach Anspruch 4,
**dadurch gekennzeichnet, dass**
durch die den Getriebedeckel (8) abgedeckte Ausnehmung des zentralen Gehäuseteils (1) das Endrad des Getriebes hindurchführbar ist, insbesondere bei Montage des Getriebes.

9. Getriebe nach Anspruch 3,
**dadurch gekennzeichnet, dass**
der vom Anschlussbereich axial überdeckte Bereich zumindest teilweise den von der Lagerung der Rotorwelle (5) oder von einem Lager (2, 3) der Rotorwelle (5) überdeckten axialen Bereich überdeckt.

10. Getriebe nach mindestens einem der vorangegangenen Ansprüche,
**dadurch gekennzeichnet, dass**
das Statorblechpaket (4) aus zwei Sorten von Einzelblechteilen zusammengesetzt ist, insbesondere stanzpaketiert, klebeverbunden und/oder schweißverbunden ist, insbesondere wobei das Statorblechpaket (4) einen ersten Abschnitt aufweist, der aus Einzelblechteilen erster Sorte zusammengesetzt ist, und einen zweiten Abschnitt aufweist, der aus Einzelblechteilen zweiter Sorte zusammengesetzt ist,
insbesondere wobei die Einzelblechteile der ersten Sorte sich radial weiter erstrecken als die Einzelblechteile der zweiten Sorte.

11. Getriebe nach mindestens einem der vorangegangenen Ansprüche,
**dadurch gekennzeichnet, dass**
am zentralen Gehäuseteil (1) eine Lageraufnahme für die Lager (2, 3) der Rotorwelle (5) ausgeformt ist, wobei die Lageraufnahme ringförmig ausgeführt ist, wobei an der Außenseite des Rings in Umfangsrichtung regelmäßig voneinander beabstandete Stützbereiche aufweist, insbesondere deren größter Radialabstand in axialer Richtung vom Motor weg zunimmt.

12. Getriebe nach mindestens einem der vorangegangenen Ansprüche,
**dadurch gekennzeichnet, dass**
am zentralen Gehäuseteil (1) eine topfförmige Aufnahme für einen Wickelkopf des Stators angeordnet ist.

13. Getriebe nach mindestens einem der vorangegangenen Ansprüche,
**dadurch gekennzeichnet, dass**
Abtriebswelle (11) und Rotorwelle (5) koaxial angeordnet sind, und/oder dass der Anschlusskasten am Getriebe angeordnet ist und zwischen dem Umrichter und dem Getriebe angeordnet ist, und/oder dass ein Sensor zwischen den Lagern (2, 3) der Rotorwelle (5) am zentralen Gehäuseteil (1) angeordnet ist, der mit der Rotorwelle (5) derart in Wirkverbindung tritt, dass eine physikalische Größe bestimmbar ist, wobei durch einen Durchlass der Lageraufnahme der Lagerung der Rotorwelle (5) elektrische Leitungen zum Sensor geführt sind, die vom Anschlussbereich durch die Ausnehmung im zentralen Gehäuseteil (1) geführt sind.

## Claims

1. Gearing having a central housing part (1),
wherein the bearings (10) of the output shaft (11) are accommodated in the central housing part (1),
wherein the central housing part (1) has a terminal box extension which is integrally formed on it and on which a converter is placed, wherein the converter has a housing lower part (51),
**characterised in that**
the central housing part (1) accommodates the bearings (2, 3) of the input shaft of the gearing, wherein the input shaft also acts as a rotor shaft (5), mounted at one end, in the central housing part (1) of an electric motor and
wherein
a thermal barrier in the form of a seal is arranged between the central housing part (1) and the stator laminated core (4) of the electric motor, in order, together with a seal arranged between the housing lower part (51) and the central housing part (1), to considerably impair the heat transfer resistance from the electronics of the converter to the motor.

2. Gearing according to Claim 1,
**characterised in that**
the rotor shaft (5) has in a first axial region an active part (17) and
in a second axial region the rotor shaft (5) has an input toothing of the gearing or is connected to an input toothing part of the gearing,
wherein the bearing arrangement, in particular the bearings (2, 3) of the rotor shaft (5), of the rotor shaft (5) is arranged axially, in particular therefore in the rotor axial direction, between the first and the second axial region,
in particular wherein a shaft sealing ring accommodated on the central housing part (1) is arranged axially between the bearing arrangement of the rotor shaft (5) and the input toothing of the gearing.

3. Gearing according to at least one of the preceding claims,
**characterised in that**
the central housing part (1) has a cutout, through which stator winding wires are led out into a connection region, in particular into a connection box, in particular led out radially from the motor interior.

4. Gearing according to at least one of the preceding claims,
**characterised in that**
a further thermal barrier, in particular seal, is arranged between the central housing part (1) and a connected gearing cover (8).

5. Gearing according to at least one of the preceding claims,
**characterised in that**
the housing lower part (51), to which power electronics of the converter are connected, in particular thermally conductively connected, and wherein the converter has a housing upper part (50) connected onto the housing lower part (51), to which the signal electronics are thermally conductively connected, in particular via interposed air.

6. Gearing according to Claim 5,
**characterised in that**
between housing lower part (51) and housing upper part (50) a thermal barrier, in particular seal, is arranged
and/or **in that** the housing upper part (50) is made of plastic.

7. Gearing according to Claim 4,
**characterised in that**
the housing lower part (51) is connected to the terminal box extension of the central housing part (1) and projects beyond the latter laterally,
and/or the housing lower part (51) in the axial direction at least partly covers the region axially covered by the central housing part (1), the region axially covered by the gearing cover (8), the region axially covered by an intermediate shaft and/or the region axially covered by the output shaft (11).

8. Gearing according to Claim 4,
**characterised in that**
the end wheel of the gearing can be led through the cutout of the central housing part (1) covered by the gearing cover (8), in particular during assembly of the gearing.

9. Gearing according to Claim 3,
**characterised in that**
the region axially covered by the connection region at least partly covers the axial region covered by the bearing arrangement of the rotor shaft (5) or by a bearing (2, 3) of the rotor shaft (5).

10. Gearing according to at least one of the preceding claims,
**characterised in that**
the stator laminated core (4) is composed of two kinds of single-lamination parts, in particular is punch-bundled, adhesively-connected and/or weld-connected,
in particular wherein the stator laminated core (4) has a first section which is composed of single-lamination parts of a first kind, and has a second section which is composed of single-lamination parts of a second kind,
in particular wherein the single-lamination parts of the first kind extend radially further than the single-lamination parts of the second kind.

11. Gearing according to at least one of the preceding claims,
**characterised in that**
a bearing receptacle for the bearings (2, 3) of the rotor shaft (5) is formed on the central housing part (1), wherein the bearing receptacle is of ring-shaped design, wherein on the outside of the ring has supporting regions spaced regularly from one another in the circumferential direction, in particular their greatest radial spacing in the axial direction increasing away from the motor.

12. Gearing according to at least one of the preceding claims,
**characterised in that**
a cup-shaped receptacle for a winding head of the stator is arranged on the central housing part (1).

13. Gearing according to at least one of the preceding claims,
**characterised in that**
output shaft (11) and rotor shaft (5) are coaxially arranged, and/or **in that** the connection box is arranged on the gearing and is arranged between the converter and the gearing, and/or in that a sensor is arranged between the bearings (2, 3) of the rotor shaft (5) on the central housing part (1), which sensor comes into operative connection with the rotor shaft (5) in such a manner that a physical quantity can be determined, wherein electrical lines are led to the sensor through a passage of the bearing receptacle of the bearing arrangement of the rotor shaft (5), which lines are led from the connection region through the cutout in the central housing part (1).

## Revendications

1. Transmission pourvue d'une partie centrale de carter (1)
dans laquelle les paliers (10) de l'arbre de sortie (11) sont logés dans la partie centrale de carter (1),
dans laquelle la partie centrale de carter (1) présente une embase de boîte à bornes formée sur elle d'une seule pièce, sur laquelle un variateur de vitesse est monté, le variateur de vitesse présentant une partie inférieure de carter (51),
**caractérisée en ce que**
la partie centrale de carter (1) reçoit les paliers (2, 3) de l'arbre d'entrée de la transmission, l'arbre d'entrée servant également d'arbre de rotor (5), monté d'un côté dans la partie centrale de carter (1), d'un moteur électrique et
une barrière thermique sous la forme d'un joint étant disposée entre la partie centrale de carter (1) et le paquet de tôles statoriques (4) du moteur électrique pour, conjointement avec un joint disposé entre la partie inférieure de carter (51) et la partie centrale de carter (1), amoindrir considérablement la transmission de chaleur de l'électronique du variateur de vitesse au moteur.

2. Transmission selon la revendication 1,
**caractérisée en ce que**
l'arbre de rotor (5) présente, dans une première zone axiale, une partie active (17) et dans une deuxième zone axiale, l'arbre de rotor (5) présente une denture menante de la transmission ou est relié à une pièce dentée menante de la transmission,
le support de l'arbre de rotor (5), en particulier les paliers (2, 3) de l'arbre de rotor (5), étant disposé axialement, donc en particulier dans la direction de l'axe de rotor, entre la première et la deuxième zone axiale,
un joint d'arbre annulaire reçu sur la partie centrale de carter (1) étant en particulier disposé axialement entre le support de l'arbre de rotor (5) et la denture menante de la transmission.

3. Transmission selon au moins l'une des revendications précédentes,
**caractérisée en ce que**
la partie centrale de carter (1) présente un évidement à travers lequel des fils de bobinage de stator sont guidés dans une zone de raccordement, en particulier dans un boîtier de raccordement, en particulier sont guidés radialement hors de l'espace intérieur du moteur.

4. Transmission selon au moins l'une des revendications précédentes,
**caractérisée en ce que**
une autre barrière thermique, en particulier un joint, est disposé(e) entre la partie centrale de carter (1) et un couvercle de transmission (8) relié à celle-ci.

5. Transmission selon au moins l'une des revendications précédentes,
**caractérisée en ce que**
la partie inférieure de carter (51) est reliée à l'électronique de puissance du variateur de vitesse, en particulier d'une manière conductrice de la chaleur, le variateur de vitesse présentant une partie supérieure de carter (50) reliée à la partie inférieure de carter (51), à laquelle l'électronique de signalisation est reliée d'une manière conductrice de la chaleur, en particulier par de l'air interposé.

6. Transmission selon la revendication 5,
**caractérisée en ce que**
une barrière thermique, en particulier un joint, est disposé(e) entre la partie inférieure de carter (51) et la partie supérieure de carter (50)
et/ou que la partie supérieure de carter (50) est réalisée en matière plastique.

7. Transmission selon la revendication 4,
**caractérisée en ce que**
la partie inférieure de carter (51) est reliée à l'embase de boîte à bornes de la partie centrale de carter (1) et fait saillie de celle-ci latéralement,
et/ou la partie inférieure de carter (51) recouvre au moins partiellement en direction axiale la zone recouverte axialement par la partie centrale de carter (1), par le couvercle de transmission (8), par un arbre intermédiaire et/ou par l'arbre de sortie (11).

8. Transmission selon la revendication 4,
**caractérisée en ce que**
la roue finale de la transmission peut être introduite à travers l'évidement de la partie centrale de carter (1) recouvert par le couvercle de transmission (8), en particulier lors du montage de la transmission.

9. Transmission selon la revendication 3,
**caractérisée en ce que**
la zone recouverte axialement par la zone de raccordement recouvre au moins partiellement la zone axiale recouverte par le support de l'arbre de rotor (5) ou par un palier (2, 3) de l'arbre de rotor (5).

10. Transmission selon au moins l'une des revendications précédentes,
**caractérisée en ce que**
la paquet de tôles statoriques (4) est composé de deux sortes de pièces de tôle individuelles, en particulier est assemblé par boutonnage, collage et/ou soudage,
le paquet de tôles statoriques (4) présentant en particulier une première partie qui est composée de pièces de tôle individuelles d'une première sorte, et une deuxième partie qui est composée de pièces de tôle individuelles d'une deuxième sorte,
les pièces de tôle individuelles de la première sorte s'étendant en particulier plus loin radialement que les pièces de tôle individuelles de la deuxième sorte.

11. Transmission selon au moins l'une des revendications précédentes,
**caractérisée en ce que**
un logement de paliers pour les paliers (2, 3) de l'arbre de rotor (5) est formé sur la partie centrale de carter (1), le logement de paliers étant de forme annulaire et présentant sur le côté extérieur de l'anneau des zones d'appui régulièrement espacées les unes des autres en direction circonférentielle, en particulier dont la plus grande distance radiale augmente dans la direction axiale en s'éloignant du moteur.

12. Transmission selon au moins l'une des revendications précédentes,
**caractérisée en ce que**
un logement en forme de pot pour une tête de bobinage du stator est disposé sur la partie centrale de carter (1).

13. Transmission selon au moins l'une des revendications précédentes,
**caractérisée en ce que**
l'arbre de sortie (11) et l'arbre de rotor (5) sont disposés coaxialement, et/ou que le boîtier de raccordement est disposé sur la transmission et disposé entre le variateur de vitesse et la transmission, et/ou qu'un capteur est disposé entre les paliers (2, 3) de l'arbre de rotor (5) sur la partie centrale de carter (1), lequel est en liaison active avec l'arbre de rotor (5) de façon à permettre la détermination d'une grandeur physique, des lignes électriques étant guidées vers le capteur à travers un passage dans le logement de paliers du support de l'arbre de rotor (5), lesquelles sont guidées depuis la zone de raccordement à travers l'évidement dans la partie centrale de carter (1).
